# EUROPEAN PATENT SPECIFICATION

(11) **EP 3 029 091 B1**
(45) Date of publication and mention of the grant of the patent: **25.03.2020**
(21) Application number: 14832935.2
(22) Date of filing: 06.06.2014
(51) Int. Cl.: C08J 7/04, B32B 27/36

(54) **COATING FILM**
BESCHICHTUNGSFILM
FILM DE REVÊTEMENT

(30) Priority: 28.07.2013 JP 2013156210; 28.07.2013 JP 2013156211; 28.07.2013 JP 2013156212
(43) Date of publication of application: 08.06.2016
(73) Proprietor: Mitsubishi Chemical Corporation, Tokyo (JP)
(72) Inventor: SATO, Takashi, Maibara-shi Shiga 521-0234 (JP); KAWASAKI, Taishi, Maibara-shi Shiga 521-0234 (JP)
(74) Representative: Ter Meer Steinmeister & Partner
(86) International application number: PCT/JP2014/065063
(87) International publication number: WO 2015/015900

(56) References cited:
- EP-A1- 2 481 581
- EP-A1- 2 561 985
- EP-A1- 2 818 498
- EP-A1- 2 886 340
- EP-A2- 1 061 094
- WO-A1-2013/001947
- WO-A1-2013/002002
- JP-A- H01 218 832
- JP-A- 2000 229 395
- JP-A- 2010 013 550

## Description

### TECHNICAL FIELD

The present invention relates to a coated film, and more particularly, to a coated film that is suitably used as a member for a prism sheet or a microlens used in a backlight unit of liquid crystal displays, etc., and has a good adhesion property to various functional layers.

### BACKGROUND ART

In recent years, liquid crystal displays have been extensively used as a display device for TVs, personal computers, digital cameras, cellular phones, etc. The liquid crystal displays have no light-emitting function by themselves. Therefore, liquid crystal displays of the type in which light is irradiated from a backside thereof using a backlight have now come to dominate.

As the backlight type liquid crystal displays, there are known those having a so-called edge light type structure or a so-called direct backlight type structure. With the recent tendency toward reduction in thickness of liquid crystal displays, the edge light type liquid crystal displays have been more frequently employed. The edge light type liquid crystal displays are generally constructed of a reflection sheet, a light guide plate, a light diffusion sheet and a prism sheet, which are successively laminated in this order. The flow of light through such edge light type liquid crystal displays is designed such that the light entered from the backlight into the light guide plate is reflected on the reflection sheet and then emitted from the surface of the light guide plate. The light emitted from the light guide plate is entered into the light diffusion sheet, diffused therein and then emitted therefrom. The light emitted from the light diffusion sheet is then entered into the prism sheet disposed next to the light diffusion sheet. In the prism sheet, the light entered thereinto is converged in the normal direction and emitted therefrom toward the liquid crystal layer.

The prism sheet used in the above construction serves for improving an optical efficiency of the backlight and enhancing a brightness thereof. As a transparent base film for the prism sheet, there has been generally used a polyester film in view of a transparency and mechanical properties thereof. In general, an easy-bonding coating layer may be further provided as an intermediate layer between the polyester film as the base material and the prism layer in order to enhance adhesion therebetween. It is known that the easy-bonding coating layer is formed of, for example, a polyester resin, an acrylic resin or a polyurethane resin (Patent Documents 1 to 3).

The prism layer may be produced, for example, by the following method. That is, an active energy ray-curable coating material is charged into a prism mold, and then a polyester film is placed on the coating material thus charged so as to interpose the coating material between the polyester film and the mold. Next, an active energy ray is irradiated to the active energy ray-curable coating material to cure the resin, and then the mold is removed from the cured resin, thereby obtaining the prism layer formed on the polyester film. In such a method, in order to form an accurate prism pattern on the prism layer, it is required to use a solvent-free type active energy ray-curable resin. However, the solvent-free type resin tends to be deteriorated in penetration into an easy-bonding layer laminated on the polyester film and swelling effect therein as compared to a solvent type resin and, therefore, tends to be insufficient in adhesion to the polyester film. In order to improve the adhesion property, a coating layer comprising a specific polyurethane resin has been proposed. However, even such a coating layer may still fail to exhibit a sufficient adhesion property to the solvent-free type resin (Patent Document 4).

In order to improve an adhesion property to the solvent-free type resin, there has been proposed a coating layer comprising a polyurethane resin and an oxazoline compound as main components (Patent Document 5). However, the conventionally proposed coating layer tends to be still insufficient in adhesion property to a prism layer being adaptable for high-brightness prisms that can meet the current requirements such as reduction in number of backlight elements and suppression of a power consumption therefor, i.e., a high-refractive index prism layer.

### CITATION LIST

### PATENT LITERATURE

Patent Document 1: Japanese Patent Application Laid-Open (KOKAI) No. 8-281890
Patent Document 2: Japanese Patent Application Laid-Open (KOKAI) No. 11-286092
Patent Document 3: Japanese Patent Application Laid-Open (KOKAI) No. 2000-229395
Patent Document 4: Japanese Patent Application Laid-Open (KOKAI) No. 2-158633
Patent Document 5: Japanese Patent Application Laid-Open (KOKAI) No. 2010-13550

Polyester films coated with a coating layer prepared from a coating solution comprising an (meth)acrylate compound are disclosed in WO 2013/002002 A1, WO 2013/001947 A1, EP 2 481 581 A1, EP 1 061 094 A2, EP 2 561 985 A1, EP 2 886 340 A1 and EP 2 818 498 A1.

### SUMMARY OF INVENTION

### TECHNICAL PROBLEM

The present invention has been accomplished in view of the above conventional problems. An object of the present invention is to provide a coated film that can exhibit a good adhesion property to various solvent-free type resins, and can be suitably used, for example, as a member for a prism sheet or a microlens employed in a backlight unit for liquid crystal displays, etc.

### SOLUTION TO PROBLEM

As a result of the present inventors' earnest study in view of the above problems, it has been found that the above problems can be readily solved by using a coated film having a specific structure. The present invention has been attained on the basis of this finding.

That is, in an aspect of the present invention, there is provided a coated film comprising:
a polyester film and
a coating layer which is formed on at least one surface of the polyester film and is prepared from a coating solution comprising a urethane (meth)acrylate compound (a) and at least one compound (b) selected from the group consisting of an oxazoline compound, an isocyanate-based compound and a carbodiimide-based compound, wherein a content of a carbon-carbon double bond moiety in the urethane (meth)acrylate compound is not less than 5% by weight.

### ADVANTAGEOUS EFFECTS OF INVENTION

In accordance with the present invention, it is possible to provide a coated film having an excellent adhesion property to a surface functional layer such as various prism layers and microlens layers, and an excellent wet heat resistance. Therefore, the present invention has a high industrial value.

### DESCRIPTION OF EMBODIMENTS

The polyester film constituting the coated film of the present invention may have either a single layer structure or a multilayer structure. Unless departing from the scope of the present invention, the polyester film may have not only a two or three layer structure but also a four or more multilayer structure, and the layer structure of the polyester film is not particularly limited.

The polyester used in the present invention may be either a homopolyester or a copolyester. The homopolyester is preferably obtained by polycondensing an aromatic dicarboxylic acid and an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexanedimethanol. Typical examples of the polyesters include polyethylene terephthalate or the like. On the other hand, as a dicarboxylic acid component of the copolyester, there may be mentioned one or more compounds selected from the group consisting of isophthalic acid, phthalic acid, terephthalic acid, 2,6-naphthalenedicarboxylic acid, adipic acid, sebacic acid and oxycarboxylic acids (such as, for example, p-oxybenzoic acid). As a glycol component of the copolyester, there may be mentioned one or more compounds selected from the group consisting of ethylene glycol, diethylene glycol, propylene glycol, butanediol, 4-cyclohexanedimethanol and neopentyl glycol.

The polymerization catalyst for production of the polyester is not particularly limited, and any conventionally known catalysts may be used as the polymerization catalyst. Examples of the polymerization catalyst include a titanium compound, a germanium compound, an antimony compound, a manganese compound, an aluminum compound, a magnesium compound and a calcium compound. Of these compounds, the titanium compound and the germanium compound are preferably used because they exhibit a high catalytic activity and are capable of effectively conducting polymerization even when used in a small amount, and can also provide a film having a high brightness owing to a less amount of these metals remaining in the film. Further, the titanium compound is more preferably used because the germanium compound is expensive.

The polyester film used in the present invention may also comprise an ultraviolet absorber in order to improve a weathering resistance of the film and prevent deterioration of liquid crystals and the like. The ultraviolet absorber is not particularly limited as long as it is a compound that is capable of absorbing an ultraviolet ray and can withstand heat applied during a process for producing the polyester film.

As the ultraviolet absorber, there are generally known an organic ultraviolet absorber and an inorganic ultraviolet absorber. In view of a good transparency of the resulting film, among these ultraviolet absorbers, the organic ultraviolet absorber is preferably used. Examples of the organic ultraviolet absorber include, but are not particularly limited to, cyclic iminoester-based ultraviolet absorbers, benzotriazole-based ultraviolet absorbers and benzophenone-based ultraviolet absorbers. Among these organic ultraviolet absorbers, cyclic iminoester-based ultraviolet absorbers and benzotriazole-based ultraviolet absorbers are preferred in view of a good durability. These ultraviolet absorbers may be used in combination of any two or more thereof.

For the main purposes of imparting an easy-slipping property to the film and preventing occurrence of flaws in the film in the respective steps, particles may be blended in the polyester layer of the film according to the present invention. The kind of particles to be blended in the polyester layer is not particularly limited, and any particles may be used as long as the particles are capable of imparting a good easy-slipping property to the film. Specific examples of the particles include inorganic particles such as silica, calcium carbonate, magnesium carbonate, barium carbonate, calcium sulfate, calcium phosphate, magnesium phosphate, kaolin, aluminum oxide and titanium oxide, and organic particles such as acrylic reins, styrene resins, urea resins, phenol resins, epoxy resins and benzoguanamine resins, etc. Further, there may also be used deposited particles obtained by precipitating and finely dispersing a part of metal compounds such as a catalyst during the process for production of the polyester.

The shape of the particles used in the polyester layer is also not particularly limited, and may be any of a spherical shape, a massive shape, a bar shape, a flat shape, etc. Further, the hardness, specific gravity, color and the like of the particles are also not particularly limited. These particles may be used in combination of any two or more kinds thereof, if required.

The average particle diameter of the above particles is usually in the range of not more than 5 µm and preferably 0.01 to 3 µm. When the average particle diameter of the particles is more than 5 µm, the obtained film tends to have an excessively coarse surface roughness, thereby causing problems in the subsequent steps upon forming various surface functional layers or the like on the polyester film.

The content of the particles in the polyester layer is usually in the range of not more than 5% by weight and preferably 0.0003 to 3% by weight. When the polyester layer comprises no particles or a less amount of the particles, although the resulting film has a high transparency and therefore provides a good film, the film tends to be insufficient in slipping property. Therefore, in such a case, it is required to take a measure for enhancing a slipping property, for example, by incorporating particles in a coating layer formed thereon, etc. On the other hand, when the content of the particles in the polyester layer is more than 5% by weight, the resulting film tends to be insufficient in transparency.

The method of adding the particles to the polyester layer is not particularly limited, and any conventionally known methods can be suitably used therefor. For example, the particles may be added at any optional stages in the process for production of the polyester forming the respective layers. The particles are preferably added to the polyester after completion of the esterification reaction or transesterification reaction.

Meanwhile, the above polyester film used in the present invention may also comprise, in addition to the above particles and ultraviolet absorbers, known additives such as an antioxidant, an antistatic agent, a thermal stabilizer, a lubricant, a dye, a pigment, etc., if required.

The thickness of the polyester film used in the present invention is not particularly limited, and the polyester film may have any thickness as long as it can be produced while maintaining a suitable film shape. The thickness of the polyester film is usually in the range of 10 to 350 µm and preferably 25 to 300 µm.

Next, an example of the process of producing the polyester film used in the present invention is more specifically explained, although the present invention is not particularly limited thereto. That is, there may be adopted such a process in which pellets obtained by drying the above-mentioned raw polyester material are extruded from a die using a single-screw extruder in the form of a molten sheet, and the molten sheet is then cooled and solidified on a chilled roll to obtain an undrawn sheet. In this case, in order to enhance a flatness of the obtained sheet, it is preferred to enhance adhesion between the sheet and the rotary chilled drum. For this purpose, an electrostatic pinning method or a liquid coating adhesion method is preferably used. Next, the thus obtained undrawn sheet is biaxially drawn. In such a case, the undrawn sheet is first drawn in one direction thereof using a roll-type or tenter-type drawing machine. The drawing temperature is usually 70 to 120°C and preferably 80 to 110°C, and the draw ratio is usually 2.5 to 7 times and preferably 3.0 to 6 times. Next, the thus drawn film is further drawn in the direction perpendicular to the drawing direction of the first stage. In this case, the drawing temperature is usually 70 to 170°C, and the draw ratio is usually 3.0 to 7 times and preferably 3.5 to 6 times. Successively, the resulting biaxially drawn sheet is heat-set at a temperature of 180 to 270°C under a tension or under relaxation within 30% to obtain a biaxially oriented film. Upon the above drawing steps, there may also be used the method in which the drawing in each direction is carried out in two or more stages. In such a case, the multi-stage drawing is preferably performed such that the draw ratio in each of the two directions finally falls within the above-specified range.

Also, in the present invention, upon producing the polyester film constituting the coated film, there may also be used a simultaneous biaxial drawing method. The simultaneous biaxial drawing method is such a method in which the above undrawn sheet is drawn and oriented in both of the machine and width directions at the same time while maintaining the sheet in a suitable temperature-controlled condition at a temperature of usually 70 to 120°C and preferably 80 to 110°C. The draw ratio used in the simultaneous biaxial drawing method is 4 to 50 times, preferably 7 to 35 times and more preferably 10 to 25 times in terms of an area ratio of the sheet to be drawn. Successively, the obtained biaxially drawn sheet is heat-set at a temperature of 170 to 250°C under a tension or under relaxation within 30% to obtain a drawn oriented film. As the apparatus used in the above simultaneous biaxial drawing method, there may be employed any conventionally known drawing apparatuses such as a screw type drawing apparatus, a pantograph type drawing apparatus and a linear drive type drawing apparatus.

Next, the method of forming the coating layer constituting the coated film of the present invention is explained. The coating layer may be formed either by an in-line coating method in which the surface of the polyester film is subjected to coating treatment during the film-forming step of the polyester film, or by an off-line coating method in which the polyester film produced is once transferred to an outside of the film production system and subjected to coating treatment. More preferably, the coating layer is formed by the in-line coating method.

The in-line coating method is a method in which the coating step is carried out during the process for production of the polyester film, more specifically, such a method in which the coating step is carried out in an optional stage from melt-extrusion of the polyester up to taking-up of the film through the drawing and heat-setting steps. In general, any of the undrawn sheet obtained by melting and rapidly cooling the polyester, the monoaxially drawn film obtained by drawing the undrawn sheet, the biaxially oriented film before the heat-setting, or the film after the heat-setting but before the taking-up may be subjected to the coating step. For example, when the film is produced by a sequential biaxial drawing method, the method in which the monoaxially drawn film obtained by drawing the undrawn sheet in a longitudinal direction (length direction) thereof is subjected to the coating step, and then the resulting coated monoaxially drawn film is further drawn in a lateral direction thereof is more excellent, though not particularly limited thereto. The above method has merits in view of production costs because formation of the film and formation of the coating layer can be performed at the same time. In addition, since the drawing is carried out after completion of the coating, it is possible to change the thickness of the coating layer by adjusting a draw ratio of the film, so that the thin-film coating step can be more easily conducted as compared to the off-line coating method. Further, since the coating layer is formed on the film before being drawn, the coating layer and the base material film can be drawn together at the same time, so that adhesion between the base material film and the coating layer can be strengthened. Further, upon producing the biaxially oriented polyester film, the film is drawn while grasping end portions of the film with clips, etc., and therefore the film can be constrained in both the longitudinal and lateral directions thereof. This allows the polyester film to be exposed to high temperature while keeping a flatness thereof without formation of wrinkles, etc., when subjected to the heat-setting step. Therefore, the temperature used in the heat treatment to be conducted after the coating can be increased up to a high temperature which has not been reached in the other conventional methods, so that the film-forming property of the coating layer can be enhanced, and the adhesion between the coating layer and the base material film can be strengthened. Furthermore, it is possible to strengthen the coating layer and enhance adhesion between the coating layer and various functional layers formed on the coating layer, wet heat resistance, etc.

In the present invention, it is essentially required that a polyester film is provided on at least one surface thereof with a coating layer prepared from a coating solution comprising a urethane (meth)acrylate compound (a) and at least one compound (b) selected from the group consisting of an oxazoline compound, an isocyanate-based compound and a carbodiimide-based compound.

The coating layer formed in the present invention is capable of improving, in particular, an adhesion property to a solvent-free type active energy ray-curable layer, for example, to form a prism layer or a microlens layer. In particular, the coating layer can be adapted for enhancing an adhesion property to a high-refractive index prism layer or microlens layer which aims at providing a high-brightness prism and tends to be deteriorated in adhesion to the coating layer.

The mechanism for enhancing the adhesion property is estimated as follow. That is, by irradiating an ultraviolet ray upon forming the prism layer or microlens layer, a carbon-carbon double bond in the urethane (meth)acrylate compound contained in the coating layer of the film of the present invention is reacted with a carbon-carbon double bond in a compound used for forming the prism layer or microlens layer to form a covalent bond therebetween.

The proportion of the carbon-carbon double bond moiety in the urethane (meth)acrylate compound is not less than 5% by weight and more preferably not less than 10% by weight in view of a good adhesion property to the prism layer or microlens layer, in particular, a good adhesion property to a resin having a high refractive index.

As the urethane (meth)acrylate compound used for forming the coating layer in the present invention, conventionally known compounds may be used and is not particularly limited. For example, there may be used a compound obtained by reacting an isocyanate-based compound and a hydroxyl group-containing (meth)acrylate compound with each other.

The isocyanate-based compound means an isocyanate or a compound having an isocyanate derivative structure such as typically a blocked isocyanate. Examples of the isocyanate include aromatic isocyanates such as tolylene diisocyanate, xylylene diisocyanate, methylene diphenyl diisocyanate, phenylene diisocyanate and naphthalene diisocyanate; aromatic ring-containing aliphatic isocyanates such as α,α,α',α'-tetramethyl xylylene diisocyanate; aliphatic isocyanates such as methylene diisocyanate, propylene diisocyanate, lysine diisocyanate, trimethyl hexamethylene diisocyanate and hexamethylene diisocyanate; and alicyclic isocyanates such as cyclohexane diisocyanate, methyl cyclohexane diisocyanate, isophorone diisocyanate, methylene-bis(4-cyclohexyl isocyanate) and isopropylidene dicyclohexyl diisocyanate. There also may be used a reaction product of these isocyanates and various polymers and compounds. Further examples of the isocyanate include polymers and derivatives of these isocyanates such as biuret compounds, isocyanurate compounds, uretdione compounds and carbodiimide-modified compounds of these isocyanates. These isocyanates may be used alone or in combination of any two or more thereof. Among these isocyanates, from the viewpoint of preventing occurrence of yellowing owing to ultraviolet radiation, aliphatic isocyanates and alicyclic isocyanates are more suitably used as compared to aromatic isocyanates.

Examples of the hydroxyl group-containing (meth)acrylate compound include 2-hydroxyethyl (meth)acrylate, hydroxypropyl (meth)acrylate, hydroxybutyl (meth)acrylate, caprolactone or alkyleneoxide adducts of these acrylates, glycerol mono(meth)acrylate, glycerol di(meth)acrylate, a glycidyl methacrylate-acrylic acid adduct, trimethylol propane mono(meth)acrylate, trimethylol di(meth)acrylate, pentaerythritol tri(meth)acrylate, dipentaerythritol penta(meth)acrylate, ditrimethylol propane tri(meth)acrylate, trimethylol propane-alkyleneoxide adduct-di(meth)acrylate, etc. These hydroxyl group-containing (meth)acrylate compounds may be used alone or in combination of any two or more thereof. From the standpoint of enhancing adhesion property of the coating layer, of these hydroxyl group-containing (meth)acrylate compounds, preferred are bifunctional (meth)acrylates and polyfunctional (meth)acrylates, and more preferred are polyfunctional (meth)acrylates.

The oxazoline compounds used for forming the coating layer in the present invention are those compounds having an oxazoline group in a molecule thereof. Of these compounds, especially preferred are polymers having an oxazoline group which may be in the form of a homopolymer of an addition-polymerizable oxazoline group-containing monomer or a copolymer of the addition-polymerizable oxazoline group-containing monomer with the other monomer. Examples of the addition-polymerizable oxazoline group-containing monomer include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline. These oxazoline compounds may be used alone or in the form of a mixture of any two or more thereof. Among these oxazoline compounds, 2-isopropenyl-2-oxazoline is more preferred because of good industrial availability thereof. The other monomers used in the copolymer are not particularly limited as long as they are monomers that are copolymerizable with the addition-polymerizable oxazoline group-containing monomer. Examples of the other monomers include (meth)acrylic acid esters such as alkyl (meth)acrylates (in which the alkyl group may be methyl, ethyl, n-propyl, isopropyl, n-butyl, isobutyl, t-butyl, 2-ethylhexyl, cyclohexyl or the like); unsaturated carboxylic acids such as acrylic acid, methacrylic acid, itaconic acid, maleic acid, fumaric acid, crotonic acid, styrenesulfonic acid and salts thereof (such as sodium salts, potassium salts, ammonium salts and tertiary amine salts); unsaturated nitriles such as acrylonitrile and methacrylonitrile; unsaturated amides such as (meth)acrylamide, N-alkyl (meth)acrylamides and N,N-dialkyl (meth)acrylamides (in which the alkyl group may be methyl, ethyl, n-propyl, isopropyl, n-butyl, isobutyl, t-butyl, 2-ethylhexyl, cyclohexyl or the like); vinyl esters such as vinyl acetate and vinyl propionate; vinyl ethers such as methyl vinyl ether and ethyl vinyl ether; α-olefins such as ethylene and propylene; halogen-containing α,β-unsaturated monomers such as vinyl chloride, vinylidene chloride and vinyl fluoride; and α,β-unsaturated aromatic monomers such as styrene and α-methyl styrene. These other monomers may be used alone or in combination of any two or more thereof.

The content of an oxazoline group in the oxazoline compound is usually in the range of 0.5 to 10 mmol/g, preferably 1 to 9 mmol/g, more preferably 3 to 8 mmol/g and even more preferably 4 to 6 mmol/g in terms of an amount of the oxazoline group contained therein. When using the oxazoline compound having an oxazoline group content in the above-specified range, an adhesion property of the resulting coating layer to various surface functional layers can be suitably enhanced.

The carbodiimide-based compound used for forming the coating layer in the present invention is a compound having a carbodiimide structure, i.e., is in the form of a compound having one or more carbodiimide structures in a molecule thereof, and the preferred carbodiimide-based compound is a polycarbodiimide-based compound having two or more carbodiimide structures in a molecule thereof in view of a good adhesion property or the like of the resulting coating layer.

The isocyanate-based compound used for forming the coating layer in the present invention includes those compounds similar to the isocyanate-based compounds constituting the aforementioned urethane (meth)acrylate compound, and the like.

When the isocyanate compound is used in the form of a blocked isocyanate, examples of blocking agents used for production thereof include active methylene-based compounds such as dimethyl malonate, diethyl malonate, methyl isobutanoyl acetate, ethyl isobutanoyl acetate, methyl acetoacetate, ethyl acetoacetate and acetyl acetone; bisulfites; phenol-based compounds such as phenol, cresol and ethyl phenol; alcohol-based compounds such as propylene glycol monomethyl ether, ethylene glycol, benzyl alcohol, methanol and ethanol; mercaptan-based compounds such as butyl mercaptan and dodecyl mercaptan; lactam-based compounds such as ε-caprolactam and δ-valerolactam; amine-based compounds such as diphenyl aniline, aniline and ethylene imine; acid amide compounds such as acetanilide and acetic acid amide; and oxime-based compounds such as formaldehyde, acetaldoxime, acetone oxime, methyl ethyl ketone oxime and cyclohexanone oxime. These blocking agents may be used alone or in combination of any two or more thereof. Among these compounds, the active methylene-based compounds are more preferred in view of enhancing the adhesion property of the resulting coating layer.

In addition, the isocyanate-based compound used in the present invention may be in the form of a single substance or a mixture or bonded product with various polymers. The isocyanate-based compound is preferably used in the form of a mixture or bonded product with polyester resins or polyurethane resins in view of enhancing dispersibility and crosslinkability of the isocyanate-based compound.

The carbodiimide-based compound may be synthesized by conventionally known techniques. In general, the carbodiimide-based compound may be obtained by a condensation reaction of a diisocyanate compound. The diisocyanate compound is not particularly limited, and may be either an aromatic diisocyanate or an aliphatic diisocyanate. Specific examples of the diisocyanate include tolylene diisocyanate, xylene diisocyanate, diphenylmethane diisocyanate, phenylene diisocyanate, naphthalene diisocyanate, hexamethylene diisocyanate, trimethyl hexamethylene diisocyanate, cyclohexane diisocyanate, methyl cyclohexane diisocyanate, isophorone diisocyanate, dicyclohexyl diisocyanate and dicyclohexylmethane diisocyanate.

Further, in order to improve water solubility or water dispersibility of the polycarbodiimide-based compound, a surfactant or a hydrophilic monomer such as a polyalkyleneoxide, a quaternary ammonium salt of a dialkylamino alcohol and a hydroxyalkyl sulfonic acid salt may be added thereto unless the addition thereof eliminates the effects of the present invention.

The content of a carbodiimide group in the carbodiimide-based compound is usually in the range of 100 to 1000, preferably 250 to 800, more preferably 300 to 700, and even more preferably 350 to 650 in terms of a carbodiimide equivalent (a weight (g) of the carbodiimide compound capable of providing 1 mol of the carbodiimide group). When the content of the carbodiimide group in the carbodiimide-based compound is out of the aforementioned range, the resulting coating layer tends to be insufficient in adhesion property to the prism layer or microlens layer.

Upon forming the coating layer of the film in the present invention, in order to improve a coating appearance of the obtained layer and enhance a transparency and an adhesion property thereof, various polymers may be used in combination with each other.

Specific examples of the various polymers include polyurethane resins, acrylic resins, polyester resins, polyvinyl compounds (such as polyvinyl alcohol), polyalkylene glycols, polyalkylene imines, methyl cellulose, hydroxy cellulose, starches, etc. Among these polymers, in view of enhancing an adhesion property of the coating layer, preferred are polyurethane resins and acrylic resins.

The polyurethane resin means a polymer compound having a urethane bond in a molecule thereof and is usually produced by the reaction between a polyol and an isocyanate. Examples of the polyol include polyester polyols, polycarbonate polyols, polyether polyols, polyolefin polyols and acrylic polyols. These compounds may be used alone or in combination of any two or more thereof.

Examples of the polyester polyols include those compounds produced by reacting a polycarboxylic acid (such as malonic acid, succinic acid, glutaric acid, adipic acid, pimelic acid, suberic acid, sebacic acid, fumaric acid, maleic acid, terephthalic acid and isophthalic acid) or an acid anhydride thereof with a polyhydric alcohol (such as ethylene glycol, diethylene glycol, triethylene glycol, propylene glycol, dipropylene glycol, tripropylene glycol, butanediol, 1,3-butanediol, 1,4-butanediol, 2,3-butanediol, 2-methyl-1,3-propanediol, 1,5-pentanediol, neopentyl glycol, 1,6-hexanediol, 3-methyl-1,5-pentanediol, 2-methyl-2,4-pentanediol, 2-methyl-2-propyl-1,3-propanediol, 1,8-octanediol, 2,2,4-trimethyl-1,3-pentanediol, 2-ethyl-1,3-hexanediol, 2,5-dimethyl-2,5-hexanediol, 1,9-nonanediol, 2-methyl-1,8-octanediol, 2-butyl-2-ethyl-1,3-propanediol, 2-butyl-2-hexyl-1,3-propanediol, cyclohexanediol, bishydroxymethylcyclohexane, dimethanol benzene, bishydroxyethoxybenzene, alkyl dialkanol amines and lactonediol), as well as those compounds having a derivative unit of a lactone compound such as polycaprolactone.

The polycarbonate polyols may be obtained by subjecting a polyhydric alcohol and a carbonate compound to dealcoholization reaction. Examples of the polyhydric alcohol include ethylene glycol, 1,2-propylene glycol, 1,3-propylene glycol, 1,2-butanediol, 1,3-butanediol, 1,4-butanediol, 1,5-pentanediol, 1,6-hexanediol, 1,4-cyclohexanediol, 1,4-cyclohexane dimethanol, 1,7-heptanediol, 1,8-octanediol, 1,9-nonanediol, 1,10-decanediol, neopentyl glycol, 3-methyl-1,5-pentanediol and 3,3-dimethylol heptane. Examples of the carbonate compound include dimethyl carbonate, diethyl carbonate, diphenyl carbonate and ethylene carbonate. Examples of the polycarbonate polyols obtained by the reaction between the above compounds include poly(1,6-hexylene)carbonate and poly(3-methyl-1,5-pentylene)carbonate.

Examples of the polyether polyols include polyethylene glycol, polypropylene glycol, polyethylene/propylene glycol, polytetramethylene ether glycol and polyhexamethylene ether glycol.

In order to enhance adhesion to various surface functional layers, among the above polyols, preferred are polyester polyols and polycarbonate polyols.

Examples of a polyisocyanate-based compound used for producing the polyurethane resin include the aforementioned isocyanate-based compound constituting the urethane (meth)acrylate, and the like.

When the polyurethane resin is synthesized, there may be used a chain extender. The chain extender is not particularly limited, and any chain extender may be used as long as it has two or more active groups capable of reacting with an isocyanate group. In general, there may be mainly used such a chain extender having two hydroxyl groups or two amino groups.

Examples of the chain extender having two hydroxyl groups include glycols, e.g., aliphatic glycols such as ethylene glycol, propylene glycol and butanediol; aromatic glycols such as xylylene glycol and bishydroxyethoxybenzene; and ester glycols such as neopentyl glycol hydroxypivalate. Examples of the chain extender having two amino groups include aromatic diamines such as tolylenediamine, xylylenediamine and diphenylmethanediamine; aliphatic diamines such as ethylenediamine, propylenediamine, hexanediamine, 2,2-dimethyl-1,3-propanediamine, 2-methyl-1,5-pentanediamine, trimethyl hexanediamine, 2-butyl-2-ethyl-1,5-pentanediamine, 1,8-octanediamine, 1,9-nonanediamine and 1,10-decanediamine; and alicyclic diamines such as 1-amino-3-aminomethyl-3,5,5-trimethyl cyclohexane, dicyclohexylmethanediamine, isopropylidenecyclohexyl-4,4'-diamine, 1,4-diaminocyclohexane and 1,3-bisaminomethyl cyclohexane.

The acrylic resin is in the form of a polymer obtained from a polymerizable monomer having a carbon-carbon double bond such as, typically, an acrylic monomer and a methacrylic monomer. The polymer may be either a homopolymer or a copolymer. The polymer may also include a copolymer of the polymer with the other polymer (such as, for example, a polyester and a polyurethane). Examples of the copolymer include a block copolymer and a graft copolymer. In addition, the polymer may also include a polymer obtained by polymerizing the polymerizable monomer having a carbon-carbon double bond in a polyester solution or a polyester dispersion (which may also be in the form of a mixture of the polymers). Further, the polymer may also include a polymer obtained by polymerizing the polymerizable monomer having a carbon-carbon double bond in a polyurethane solution or a polyurethane dispersion (which may also be in the form of a mixture of the polymers). Similarly, the polymer may also include a polymer obtained by polymerizing the polymerizable monomer having a carbon-carbon double bond in the other polymer solution or the other polymer dispersion (which may also be in the form of a mixture of the polymers).

The above polymerizable monomer having a carbon-carbon double bond is not particularly limited. Examples of the typical compounds as the polymerizable monomer include various carboxyl group-containing monomers such as acrylic acid, methacrylic acid, crotonic acid, itaconic acid, fumaric acid, maleic acid and citraconic acid, and salts thereof; various hydroxyl group-containing monomers such as 2-hydroxyethyl (meth)acrylate, 2-hydroxypropyl (meth)acrylate, 4-hydroxybutyl (meth)acrylate, monobutylhydroxyl fumarate and monobutylhydroxyl itaconate; various (meth)acrylic acid esters such as methyl (meth)acrylate, ethyl (meth)acrylate, propyl (meth)acrylate, butyl (meth)acrylate and lauryl (meth)acrylate; various nitrogen-containing vinyl-based monomers such as (meth)acrylamide, diacetone acrylamide, N-methylol acrylamide and (meth)acrylonitrile; various styrene derivatives such as styrene, α-methyl styrene, divinyl benzene and vinyl toluene; various vinyl esters such as vinyl acetate and vinyl propionate; various silicon-containing polymerizable monomers such as γ-methacryloxypropyl trimethoxysilane and vinyl trimethoxysilane; various phosphorus-containing vinyl-based monomers; various halogenated vinyl-based monomers such as vinyl chloride and vinylidene chloride; and various conjugated dienes such as butadiene.

In addition, when forming the coating layer of the film in the present invention, in order to enhance a coating appearance, a transparency and a strength of the coating layer, crosslinking agents other than the oxazoline compound, the isocyanate-based compound and the carbodiimide-based compound may also be used in combination with these compounds.

Examples of the crosslinking agents include an epoxy compound, a melamine compound, a silane coupling compound, etc. Among the above crosslinking agents, the epoxy compound is preferred in view of enhancing an adhesion property of the resulting coating layer.

As the epoxy compound, there may be mentioned, for example, a compound having an epoxy group in a molecule thereof, and a prepolymer and a cured product of such a compound. Examples of the epoxy compound include condensation products of epichlorohydrin with a hydroxyl group of ethylene glycol, polyethylene glycol, glycerol, polyglycerol, bisphenol A, etc., or an amino group. Specific examples of the epoxy compound include polyepoxy compounds, diepoxy compounds, monoepoxy compounds and glycidyl amine compounds. Examples of the polyepoxy compounds include sorbitol polyglycidyl ether, polyglycerol polyglycidyl ether, pentaerythritol polyglycidyl ether, diglycerol polyglycidyl ether, triglycidyl tris(2-hydroxyethyl)isocyanate, glycerol polyglycidyl ether and trimethylolpropane polyglycidyl ether. Examples of the diepoxy compounds include neopentyl glycol diglycidyl ether, 1,6-hexanediol diglycidyl ether, resorcin diglycidyl ether, ethylene glycol diglycidyl ether, polyethylene glycol diglycidyl ether, propylene glycol diglycidyl ether, polypropylene glycol diglycidyl ether and polytetramethylene glycol diglycidyl ether. Examples of the monoepoxy compounds include allyl glycidyl ether, 2-ethylhexyl glycidyl ether and phenyl glycidyl ether. Examples of the glycidyl amine compounds include N,N,N',N'-tetraglycidyl-m-xylylenediamine and 1,3-bis(N,N-diglycidylamino)cyclohexane.

The melamine compounds are compounds having a melamine skeleton therein. Examples of the melamine compounds include alkylolated melamine derivatives, partially or completely etherified compounds obtained by reacting the alkylolated melamine derivative with an alcohol, and a mixture of these compounds. Examples of the alcohol suitably used for the above etherification include methyl alcohol, ethyl alcohol, isopropyl alcohol, n-butanol and isobutanol. The melamine compound may be either a monomer or a dimer or higher polymer, or may be in the form of a mixture thereof. In addition, there may also be used those compounds obtained by co-condensing a urea or the like to a part of melamine. Further, a catalyst may also be used to enhance a reactivity of the melamine compound.

Meanwhile, these crosslinking agents are used for improving a performance of the coating layer by allowing the crosslinking agents to react with the compounds contained therein during a drying step or a film-forming step thereof. Therefore, it is estimated that the resulting coating layer comprises the unreacted crosslinking agent, compounds obtained after the reaction, or a mixture thereof.

Also, in order to improve a slipping property and an anti-blocking property of the film, particles are preferably used in combination with the aforementioned materials in the coating layer upon forming the coating layer.

The average particle diameter of the particles is preferably in the range of not more than 1.0 µm, more preferably not more than 0.5 µm and especially preferably not more than 0.2 µm from the viewpoint of a good transparency of the resulting film. In addition, if it is required to further increase effects of improving the slipping property and the anti-blocking property of the weight and more preferably 35 to 85% by weight based on a total amount of whole non-volatile components in the coating solution. When the content of the urethane (meth)acrylate compound in the coating solution is out of the above-specified range, the resulting coating layer tends to be insufficient in adhesion property to the prism layer or microlens layer after wet heat resistance treatment.

In the case of using the oxazoline compound in the coating solution for forming the coating layer of the film of the present invention, the content of the carbon-carbon double bond moiety of the urethane (meth)acrylate compound in the coating solution is preferably in the range of not less than 1.0% by weight, more preferably not less than 2.0% by weight and even more preferably not less than 3.5% by weight based on a total amount of whole non-volatile components in the coating solution. When the content of the carbon-carbon double bond moiety of the urethane (meth)acrylate compound in the coating solution is out of the above-specified range, the resulting coating layer tends to be insufficient in adhesion property to the prism layer or microlens layer after wet heat resistance treatment.

The content of the oxazoline compound in the coating solution for forming the coating layer of the film of the present invention is usually in the range of 5 to 90% by weight, preferably 5 to 75% by weight and more preferably 10 to 60% by weight based on a total amount of whole non-volatile components in the coating solution. When the content of the oxazoline compound in the coating solution is out of the above-specified range, the resulting coating layer tends to be insufficient in adhesion property to the prism layer or microlens layer after wet heat resistance treatment.

In the case of using the isocyanate-based compound in the coating solution for forming the coating layer of the film of the present invention, the content of the urethane (meth)acrylate compound in the coating solution is usually in the range of 5 to 95% by weight, preferably 10 to 90% by weight and more preferably 15 to 85% by weight based on a total amount of whole non-volatile components in the coating solution. When the content of the urethane (meth)acrylate compound in the coating solution is out of the above-specified range, the resulting coating layer tends to be insufficient in adhesion property to the prism layer or microlens layer after wet heat resistance treatment.

In the case of using the isocyanate-based compound in the coating solution for forming the coating layer of the film of the present invention, the content of the carbon-carbon double bond moiety of the urethane (meth)acrylate compound in the coating solution is preferably in the range of not less than 0.75% by weight, more preferably not less than 1.0% by weight and even more preferably not less than 1.5% by weight based on a total amount of whole non-volatile components in the coating solution. When the content of the carbon-carbon double bond moiety of the urethane (meth)acrylate compound in the coating solution is out of the above-specified range, the resulting coating layer tends to be insufficient in adhesion property to the prism layer or microlens layer after wet heat resistance treatment.

The content of the isocyanate-based compound in the coating solution for forming the coating layer of the film of the present invention is usually in the range of 5 to 90% by weight, preferably 5 to 85% by weight and more preferably 10 to 80% by weight based on a total amount of whole non-volatile components in the coating solution. When the content of the isocyanate-based compound in the coating solution is out of the above-specified range, the resulting coating layer tends to be insufficient in adhesion property to the prism layer or microlens layer after wet heat resistance treatment.

In the case of using the carbodiimide-based compound in the coating solution for forming the coating layer of the film of the present invention, the content of the urethane (meth)acrylate compound in the coating solution is usually in the range of 10 to 95% by weight, preferably 10 to 90% by weight and more preferably 20 to 80% by weight based on a total amount of whole non-volatile components in the coating solution. When the content of the urethane (meth)acrylate compound in the coating solution is out of the above-specified range, the resulting coating layer tends to be insufficient in adhesion property to the prism layer or microlens layer after wet heat resistance treatment.

In the case of using the carbodiimide-based compound in the coating solution for forming the coating layer of the film of the present invention, the content of the carbon-carbon double bond moiety of the urethane (meth)acrylate compound in the coating solution is preferably in the range of not less than 1.0% by weight, more preferably not less than 1.5% by weight and even more preferably not less than 2.0% by weight based on a total amount of whole non-volatile components in the coating solution. When the content of the carbon-carbon double bond moiety of the urethane (meth)acrylate compound in the coating solution is out of the above-specified range, the resulting coating layer tends to be insufficient in adhesion property to the prism layer or microlens layer after wet heat resistance treatment.

The content of the carbodiimide-based compound in the coating solution for forming the coating layer of the film of the present invention is usually in the range of 5 to 90% by weight, preferably 5 to 85% by weight and more preferably 15 to 70% by weight based on a total amount of whole non-volatile components in the coating solution. When the content of the carbodiimide-based compound in the coating solution is out of the above-specified range, the resulting coating layer tends to be insufficient in adhesion property to the prism layer or microlens layer after wet heat resistance treatment.

The content of the particles in the coating solution for forming the coating layer of the film of the present invention, based on a total amount of whole non-volatile components in the coating solution, is not specifically limited because the slipping property and the anti-blocking property of the resulting film tend to vary depending upon a particle diameter of the particles and properties of the polyester film. However, the content of the particles in the coating solution is preferably in the range of not more than 25% by weight, more preferably 3 to 15% by weight and even more preferably 3 to 10% by weight. When the content of the particles in the coating solution is more than 25% by weight, the resulting coating layer tends to be deteriorated in transparency or adhesion property.

The polyester film used in the present invention may also be provided, on its surface opposed to the surface on which the above coating layer is formed, with an additional coating layer. For examples, in the case where a functional layer such as an anti-sticking layer, a light diffusion layer and a hard coat layer is to be formed on the surface of the polyester film which is opposed to the surface on which the prism layer or microlens layer is formed, the coating layer formed on the opposite surface of the polyester film is capable of enhancing an adhesion property to the functional layer. The coating layer formed on the opposite surface of the polyester film may comprise conventionally known components, for example, a polymer such as a polyester resin, an acrylic resin and a polyurethane resin, a crosslinking agent such as an oxazoline compound, an epoxy compound, a melamine compound, an isocyanate-based compound and a carbodiimide-based compound, etc. These components or materials may be respectively used alone or in combination of any two or more thereof. In addition, the coating layer formed on the opposite surface of the polyester film may be the above coating layer formed from the above coating solution comprising the urethane (meth)acrylate compound (a) and the at least one compound (b) selected from the group consisting of an oxazoline compound, an isocyanate-based compound and a carbodiimide-based compound (i.e., the same coating layer may be formed on both side surfaces of the polyester film).

The analysis of the components contained in the coating layer may be conducted, for example, by analyzing methods such as TOF-SIMS, ESCA and fluorescent X-ray analysis.

When forming the coating layer by the in-line coating method, the coated film is preferably produced by the method in which an aqueous solution or a water dispersion comprising a series of the above mentioned compounds is prepared as a coating solution having a concentration of about 0.1 to about 50% by weight in terms of a solid content thereof, and the thus prepared coating solution is applied onto the polyester film. The coating solution may also comprise an organic solvent for the purpose of improving a dispersibility in water, a film-forming property, etc., unless the subject matter of the present invention is adversely affected by addition of the organic solvent. The organic solvents may be used alone, or may be appropriately used in the form of a mixture of any two or more thereof.

The film thickness of the coating layer formed on the polyester film of the coated film in the present invention is usually in the range of 0.002 to 1.0 µm, preferably 0.005 to 0.5 µm and more preferably 0.01 to 0.2 µm. The feature of the coating layer of the present invention resides in excellent adhesion property in spite of the small thickness. When the film thickness of the coating layer is out of the above-specified range, the resulting coating layer tends to be deteriorated in adhesion property, coating appearance and anti-blocking property.

As the method of forming the coating layer of the present invention, there may be used conventionally known coating methods such as a gravure coating method, a reverse roll coating method, a die coating method, an air doctor coating method, a blade coating method, a rod coating method, a bar coating method, a curtain coating method, a knife coating method, a transfer roll coating method, a squeeze coating method, an impregnation coating method, a kiss coating method, a spray coating method, a calendar coating method, an extrusion coating method, etc.

In the present invention, the drying and curing conditions used upon forming the coating layer on the polyester film are not particularly limited. For example, in the case where the coating layer is formed by an off-line coating method, the coating layer may be subjected to heat-setting usually at a temperature of 80 to 200°C for 3 to 40 sec and preferably at a temperature of 100 to 180°C for 3 to 40 sec.

On the other hand, in the case where the coating layer is formed by an in-line coating method, the coating layer may be subjected to heat-setting usually at a temperature of 70 to 280°C for 3 to 200 sec.

Further, the polyester film constituting the coated film of the present invention may also be previously subjected to surface treatments such as corona treatment and plasma treatment.

The coating layer of the coated film according to the present invention is generally provided thereon with a prism layer or a microlens layer in order to improve a brightness of the liquid crystal display. In particular, it is possible to provide, on the coating layer, a high-refractive index resin layer required to attain the high brightness which hardly ensures a good adhesion property to the film. In recent years, in order to efficiently enhance a brightness of the liquid crystal display, there have been proposed prism layers with various shapes. In general, the prism layers have plural rows of prisms each having a triangular sectional shape which are arranged in parallel with each other. Also, there have been proposed microlens layers with various shapes. In general, the microlens layers have a structure in which a number of semispherical convex lenses are provided on a film. Both of the prism layer and the microlens layer may respectively have any conventionally known shapes.

The microlens layer may have, for example, such a shape in which a thickness of the layer is 10 to 500 µm, and respective lenses have a semispherical shape having a diameter of 10 to 500 µm. The shape of each lens of the microlens layer may also be a conical shape or a pyramidal shape.

As the materials of the prism layer and the microlens layer, there may be used conventionally known materials. Examples of the materials of the prism layer and the microlens layer include active energy ray-curable resins such as, typically, (meth)acrylate-based resins. Examples of the compounds constituting the above resins generally include polyhydric alcohol components such as ethylene glycol, propylene glycol, tetramethylene glycol and hexamethylene glycol, and (meth)acrylate-based compounds having a bisphenol A structure, a urethane structure, a polyester structure, an epoxy structure, etc.

The refractive index of the active energy ray-curable resin layer is preferably as high as possible because there is such a tendency that the resin layer having a higher refractive index is enhanced in brightness thereof. The refractive index of the active energy ray-curable resin layer is usually in the range of 1.56 to 1.65, preferably 1.57 to 1.64 and more preferably 1.58 to 1.63. When the refractive index of the active energy ray-curable resin layer is out of the above-specified range, the brightness of the resin layer tends to be hardly enhanced to a sufficient extent.

As the method for formulating the high-refractive index resin required to achieve a high brightness of the film, there may be mentioned methods in which a compound having many aromatic structures, a sulfur atom, a halogen atom and a metal compound are used in addition to the above general compounds. Among these methods, from the standpoint of a uniform refractive index of the prism layer or the microlens layer and from the environmental viewpoints, preferred are the methods using the compound having many aromatic structures or a sulfur atom.

Examples of the compound having many aromatic structures include compounds having a condensed polycyclic aromatic structure such as naphthalene, anthracene, phenanthrene, naphthacene, benzo[a]anthracene, benzo[a]phenanthrene, pyrene, benzo[c]phenanthrene and perylene; compounds having a biphenyl structure; and compounds having a fluorene structure.

Various substituent groups may be introduced into the biphenyl structure, the fluorene structure and the condensed polycyclic aromatic structure. In particular, the compounds having the above structures into which a substituent group comprising a benzene ring such as a phenyl group is introduced are preferred because they are capable of producing a layer having a higher refractive index. In addition, it is also possible to introduce an atom capable of enhancing a refractive index such as a sulfur atom and a halogen atom into the above structures. Further, in order to enhance an adhesion property of the prism layer and the microlens layer to the coating layer, various functional groups such as an ester group, an amide group, a hydroxyl group, an amino group and an ether group may be introduced into the above structures.

### EXAMPLES

The present invention is described in more detail below by Examples. However, these Examples are only illustrative and not intended to limit the present invention thereto. In addition, the measuring and evaluating methods used in the present invention are as follows.

### (1) Method of measuring intrinsic viscosity of polyester:

One gram of a polyester from which the other polymer components incompatible with the polyester and pigments were previously removed was accurately weighed, and mixed with and dissolved in 100 mL of a mixed solvent comprising phenol and tetrachloroethane at a weight ratio of 50:50, and a viscosity of the resulting solution was measured at 30°C.

### (2) Method of measuring average particle diameter:

Using TEM ("H-7650" manufactured by Hitachi High-Technologies Corp.), the coating layer was observed to measure particle diameters of 10 particles therein and calculate an average particle diameter thereof from the measured ten values.

### (3) Weight of carbon-carbon double bond moiety in urethane (meth)acrylate compound having carbon-carbon double bond:

The weight of a carbon-carbon double bond moiety in a urethane (meth)acrylate compound having a carbon-carbon double bond was calculated from a molecular weight and a number of carbon-carbon double bonds thereof, or calculated from assignments of respective peaks observed in ¹HNMR and ¹³CNMR. The NMR measurement was conducted after drying the compound under reduced pressure using NMR ("AVANCE III 600" manufactured by Bruker Biospin K.K.).

### (4) Method of measuring thickness of coating layer:

The surface of the coating layer was dyed with RuO₄, and the resulting film was embedded in an epoxy resin. Thereafter, the resin-embedded film was cut into a piece by an ultrathin sectioning method, and the cut piece was dyed with RuO₄ to observe and measure a cut section of the coating layer using TEM ("H-7650" manufactured by Hitachi High-Technologies Corp.). The measurement of the thickness of the coating layer was conducted at 10 positions of the coating layer, and an average value of the thus measured 10 thickness values was defined as a thickness of the coating layer.

### (5) Method for evaluating adhesion property:

A composition comprising 40 parts by weight of 2-biphenoxyethyl acrylate, 10 parts by weight of 4,4'-(9-fluorenylidene) bis(2-phenoxyethyl acrylate), 37 parts by weight of ethylene glycol-modified bisphenol A acrylate (number of ethylene glycol chains: 8), 10 parts by weight of trimethylol propane triacrylate and 3 parts by weight of diphenyl(2,4,6-trimethylbenzoyl)phosphine oxide was placed in a mold for forming a prism layer in which plural rows of prism-shaped mold cavities each having an apex angle of 65° were arranged with a pitch of 50 µm in parallel with each other. Then, the coated film was overlapped on the resin in the mold such that the coating layer of the coated film came into contact with the resin. The composition was uniformly spread using a roller, and then an ultraviolet ray was irradiated thereover using an ultraviolet irradiation apparatus to cure the resin. Next, the resulting film was released from the mold to obtain a film on which the prism layer (refractive index: 1.58) was formed. The prism layer of the film immediately after the formation of the prism layer (adhesion property 1) and the prism layer of the film after being subjected to treatment at a temperature of 80°C for 48 hr in an environment of 90% RH (adhesion property 2) were cut by a cutter knife to form flaws thereon at intervals of 5 mm. Then, a 24 mm-wide tape ("Cellotape (registered trademark) CT-24" produced by Nichiban Co., Ltd.) was attached onto the thus cut surface of the prism layer, and then rapidly peeled off therefrom at a peel angle of 180°. Then, the surface of the prism layer from which the tape was peeled off was observed to measure an area of the layer peeled off together with the tape. The evaluation ratings are as follows.
A: Peeled area of the layer was not more than 5%.
B: Peeled area of the layer was more than 5% but not more than 15%.
C: Peeled area of the layer was more than 15% but not more than 25%.
D: Peeled area of the layer was more than 25%.

The polyesters used in the respective Examples and Comparative Examples were prepared by the following methods.

### <Method for producing polyester (A)>

One hundred parts by weight of dimethyl terephthalate and 60 parts by weight of ethylene glycol as well as ethyl acid phosphate and magnesium acetate tetrahydrate as a catalyst in amounts of 30 ppm and 100 ppm, respectively, based on the polyester as produced, were subjected to esterification reaction at 260°C in a nitrogen atmosphere. Successively, tetrabutyl titanate in an amount of 50 ppm based on the polyester as produced was added to the reaction solution. While heating the resulting mixture to 280°C over 2 hr and 30 min, the pressure of the reaction system was reduced to an absolute pressure of 0.3 kPa, and further the mixture was subjected to melt-polycondensation for 80 min, thereby obtaining a polyester (A) having an intrinsic viscosity of 0.63.

### <Method for producing polyester (B)>

One hundred parts by weight of dimethyl terephthalate and 60 parts by weight of ethylene glycol as well as magnesium acetate tetrahydrate as a catalyst in an amount of 900 ppm based on the polyester as produced, were subjected to esterification reaction at 225°C in a nitrogen atmosphere. Successively, orthophosphoric acid and germanium dioxide in amounts of 3500 ppm and 70 ppm, respectively, based on the polyester as produced, were added to the reaction solution. While heating the resulting mixture to 280°C over 2 hr and 30 min, the pressure of the reaction system was reduced to an absolute pressure of 0.4 kPa, and further the mixture was subjected to melt-polycondensation for 85 min, thereby obtaining a polyester (B) having an intrinsic viscosity of 0.64.

### <Method for producing polyester (C)>

The same procedure as used in the above method for producing the polyester (A) was conducted except that silica particles having an average particle diameter of 2 µm were added in an amount of 0.3 part by weight before the melt-polycondensation, thereby obtaining a polyester (C).

Examples of the compounds constituting the coating layer are as follows.

### (Examples of compounds)

### •Urethane (meth)acrylate compound: (IA)

Water dispersion of a urethane acrylate comprising a dicyclohexylmethane diisocyanate unit, an isophthalic acid unit, an adipic acid unit, a dipentaerythritol pentaacrylate unit, a bisphenol A ethyleneoxide adduct unit (ethyleneoxide chain: n = 2), a neopentyl glycol unit and a dimethylol propanoic acid unit at a ratio of 32:6:6:22:8:21:5 (mol%) and having a carbon-carbon double bond moiety content of 10% by weight.

### •Urethane (meth)acrylate compound: (IB)

Tri- to hexa-functional polyester-based polyurethane acrylate having a number average molecular weight of 1500 (g/mol) and a carbon-carbon double bond moiety content of 7% by weight.

### •Oxazoline compound: (IIA)

Acrylic polymer having an oxazoline group and a polyalkyleneoxide chain (oxazoline group content: 4.5 mmol/g).

### •Oxazoline compound: (IIB)

Acrylic polymer having an oxazoline group and a polyalkyleneoxide chain (oxazoline group content: 7.7 mmol/g).

### •Active methylene blocked polyisocyanate: (IIC)

### (I) Blocked polyisocyanate produced by the following method:

One thousand parts by weight of hexamethylene diisocyanate were stirred at 60°C, and 0.1 part by weight of tetramethyl ammonium caprylate as a catalyst was added thereto. After 4 hr, 0.2 part by weight of phosphoric acid was added to the reaction solution to terminate the reaction, thereby obtaining an isocyanurate-type polyisocyanate composition. One hundred parts by weight of the thus obtained isocyanurate-type polyisocyanate composition, 42.3 parts by weight of methoxy polyethylene glycol having a number-average molecular weight of 400 and 29.5 parts by weight of propylene glycol monomethyl ether acetate were charged into a reactor and held therein at 80°C for 7 hr. Thereafter, while the resulting reaction solution was held at 60°C, 35.8 parts by weight of methyl isobutanoyl acetate, 32.2 parts by weight of diethyl malonate and 0.88 part by weight of a 28% methanol solution of sodium methoxide were added thereto, followed by allowing the resulting mixture to stand for 4 hr. In addition, 58.9 parts by weight of n-butanol were added to the mixture, and then the resulting reaction solution was held at 80°C for 2 hr, and thereafter 0.86 part by weight of 2-ethylhexyl acid phosphate was added thereto, thereby obtaining a blocked polyisocyanate.

### •Isocyanate-based compound: (IID)

Aqueous blocked isocyanate-based compound comprising a blocked isocyanate comprising a hexamethylene diisocyanate trimer unit, a methoxy polyethylene glycol unit having a number-average molecular weight of 1400 and a methyl ethyl ketone oxime unit at a ratio of 30:2:68 (mol%), and a urethane resin obtained by neutralizing a prepolymer comprising a polycarbonate polyol unit having a number-average molecular weight of 2000 which was produced from 1,6-hexanediol and diethyl carbonate, an isophorone diisocyanate unit, a trimethylol propane unit and a dimethylol propionic acid unit at a ratio of 24:55:3:18 (mol%) with triethylamine and then subjecting the resulting neutralized product to chain extension reaction using diethylene triamine.

### • Isocyanate-based compound: (IIE)

Aqueous blocked polyisocyanate compound comprising a tolylene diisocyanate trimethylol propane adduct unit (tolylene diisocyanate: trimethylol propane = 3:1 (mol%)), a methoxy polyethylene glycol unit having a number-average molecular weight of 2000, an N,N,N',N'-tetrakis(2-hydroxyethyl)ethylenediamine unit and a methyl ethyl ketone oxime unit at a ratio of 33:2:55:10 (mol%).

### • Carbodiimide-based compound: (IIF)

Polycarbodiimide compound having a carbodiimide equivalent of 430 g/mol.

### • Carbodiimide-based compound: (IIG)

Polycarbodiimide compound having a carbodiimide equivalent of 600 g/mol.

### • Carbodiimide-based compound: (IIH)

Polycarbodiimide compound having a carbodiimide equivalent of 380 g/mol.

### • Polyurethane resin: (IIIA)

Water dispersion of a polyester-based polyurethane resin comprising a tolylene diisocyanate unit, a terephthalic acid unit, an isophthalic acid unit, an ethylene glycol unit, a neopentyl glycol unit and a dimethylol propionic acid unit at a ratio of 14:17:17:23:24:5 (mol%).

### • Polyurethane resin: (IIIB)

Water dispersion of a polycarbonate polyurethane resin comprising a polycarbonate polyol unit having a number-average molecular weight of 2000 which was produced from 1,6-hexanediol and diethyl carbonate, a methylene-bis(4-cyclohexyl isocyanate) unit and a dimethylol propionic acid unit at a ratio of 45:50:5 (mol%).

### • Acrylic resin: (IIIC)

Water dispersion of an acrylic resin comprising an ethyl acrylate unit, an n-butyl acrylate unit, a methyl methacrylate unit, an N-methylol acrylamide unit, an acrylic acid unit at a ratio of 67:17:10:2:4 (mol%) (emulsifier: anionic surfactant).

### • Melamine compound: (IVA) Hexamethoxymethylol melamine • Epoxy compound: (IVB)

Polyglycerol polyglycidyl ether.

### • Particles: (V)

Silica sol having an average particle diameter of 0.07 µm

### Example 1:

A mixed raw material obtained by mixing the polyesters (A), (B) and (C) in amounts of 89% by weight, 5% by weight and 6% by weight, respectively, as a raw material for outermost layers (surface layers), and a mixed raw material obtained by mixing the polyesters (A) and (B) in amounts of 95% by weight and 5% by weight, respectively, as a raw material for an intermediate layer, were respectively charged into two extruders, melted therein at 285°C, and then co-extruded therefrom on a chilled roll whose surface was controlled to a temperature of 40°C into a two-kind/three-layer structure (surface layer/intermediate layer/surface layer = 1:18:1 as output), followed by cooling and solidifying the thus co-extruded sheet on the chilled roll, thereby obtaining an undrawn sheet.

Next, the thus obtained undrawn sheet was drawn utilizing a difference between peripheral speeds of rolls at a sheet temperature of 85°C at a draw ratio of 3.4 times in a longitudinal direction thereof. Thereafter, a coating solution 1 shown in the below-mentioned Table 1-1 was applied on both surfaces of the thus obtained longitudinally drawn sheet. Then, the resulting coated sheet was introduced into a tenter where the sheet was drawn at 120°C at a draw ratio of 4.0 times in a lateral direction thereof and then heat-set at 225°C. Thereafter, the obtained drawn sheet was relaxed by 2% in a lateral direction thereof, thereby obtaining a polyester film having a thickness of 125 µm which was provided on both surfaces thereof with a coating layer having a thickness of 0.01 µm (after dried). As a result of evaluating the thus obtained polyester film, it was confirmed that the film exhibited a good adhesion property to a prism layer. The properties of the film are shown in Table 2-1 below.

### Examples 2 to 46:

The same procedure as in Example 1 was conducted except that the coating agent composition was changed to those shown in Tables 1-1 and 1-2, thereby obtaining polyester films. As a result of evaluating the thus obtained coated films, it was confirmed that properties of the polyester films were as shown in Table 2-1 and 2-2, i.e., the coated films exhibited a good adhesion property.

### Comparative Examples 1 to 6:

The same procedure as in Example 1 was conducted except that the coating agent composition was changed to those shown in Table 1-2, thereby obtaining polyester films. As a result of evaluating the thus obtained coated films, it was confirmed that properties of the coated films were as shown in Table 2-2, i.e., the coated films exhibited a poor adhesion property.

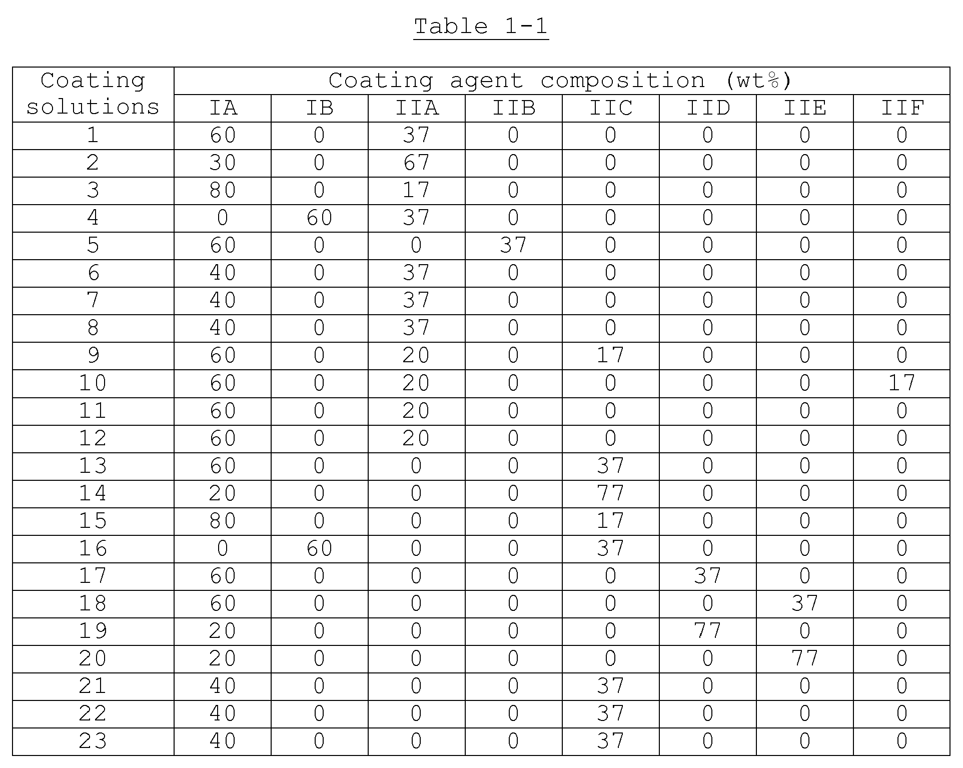

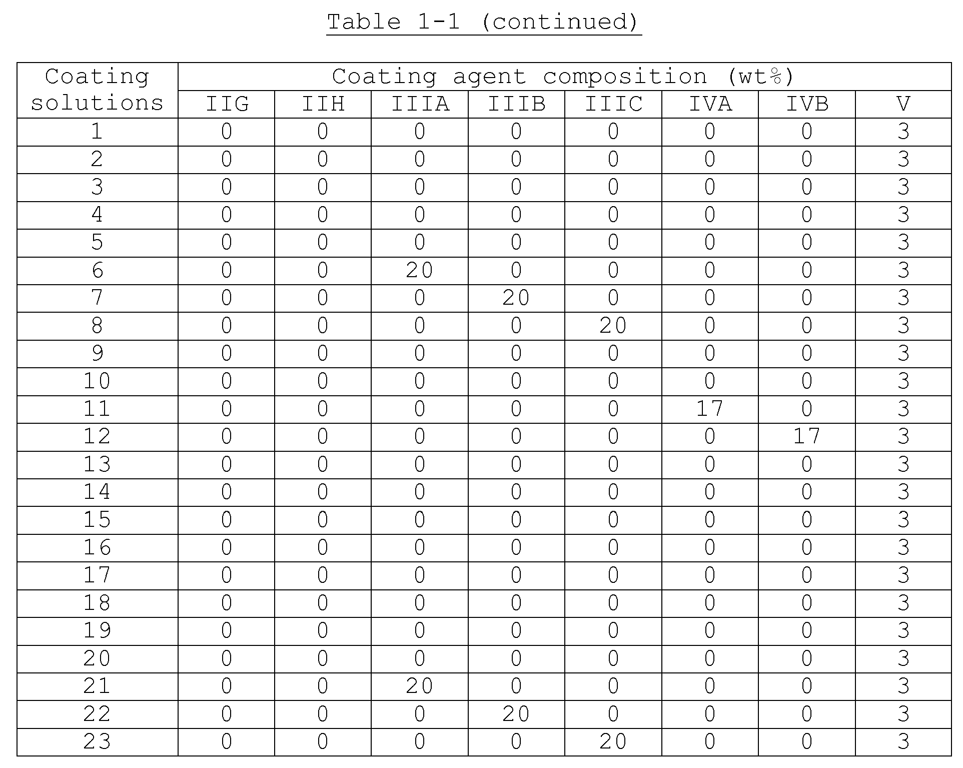

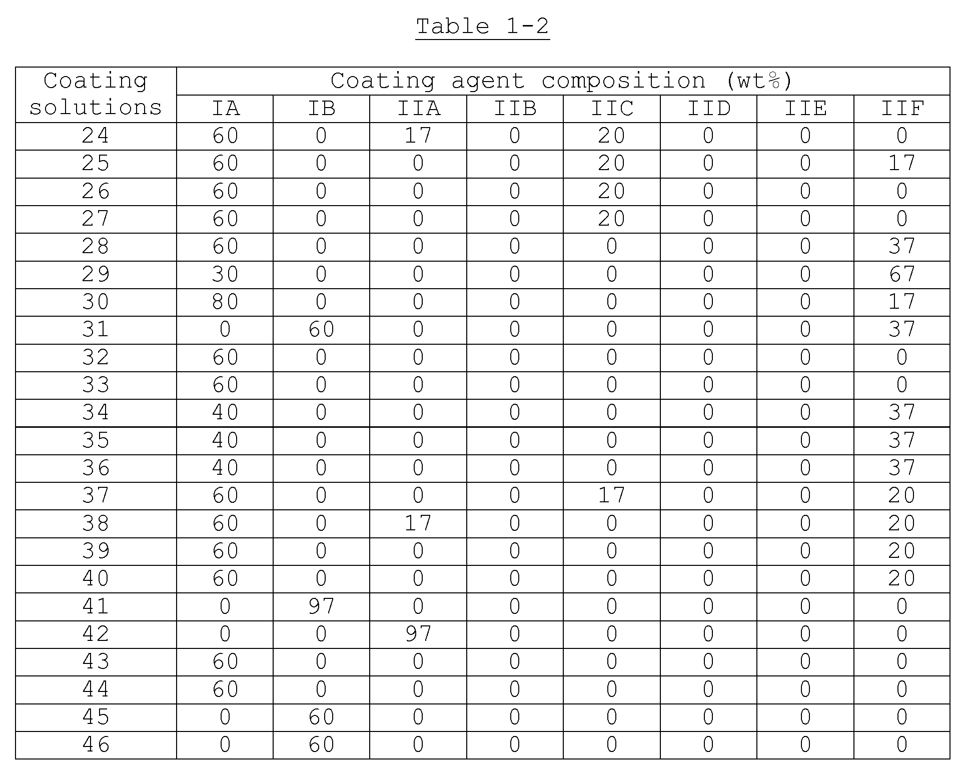

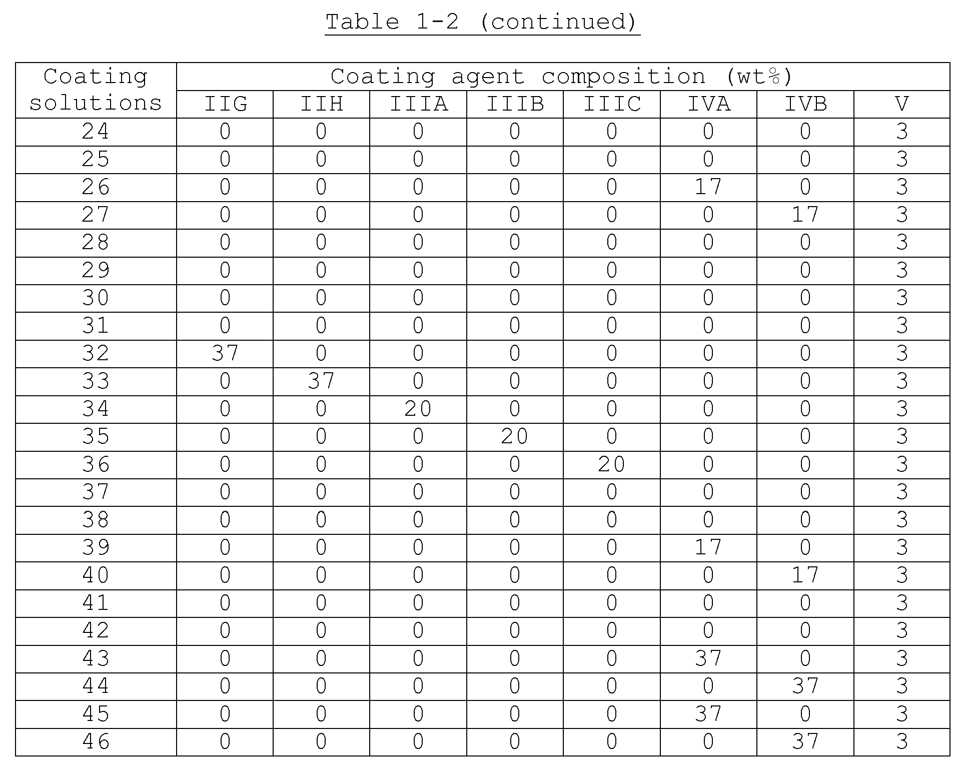

**Table 2-1**

| Examples | Coating solution | Thickness (µm) | Adhesion property 1 | Adhesion property 2 |
|---|---|---|---|---|
| Example 1 | 1 | 0.01 | A | A |
| Example 2 | 1 | 0.02 | A | A |
| Example 3 | 1 | 0.06 | A | A |
| Example 4 | 2 | 0.02 | A | B |
| Example 5 | 3 | 0.02 | A | A |
| Example 6 | 4 | 0.02 | A | B |
| Example 7 | 5 | 0.02 | A | B |
| Example 8 | 6 | 0.02 | A | A |
| Example 9 | 7 | 0.02 | A | A |
| Example 10 | 8 | 0.02 | A | A |
| Example 11 | 9 | 0.02 | A | A |
| Example 12 | 10 | 0.02 | A | A |
| Example 13 | 11 | 0.02 | A | B |
| Example 14 | 12 | 0.02 | A | A |
| Example 15 | 13 | 0.01 | A | A |
| Example 16 | 13 | 0.02 | A | A |
| Example 17 | 13 | 0.06 | A | A |
| Example 18 | 14 | 0.02 | A | A |
| Example 19 | 15 | 0.02 | A | A |
| Example 20 | 16 | 0.02 | A | B |
| Example 21 | 17 | 0.02 | A | A |
| Example 22 | 18 | 0.02 | A | A |
| Example 23 | 19 | 0.02 | A | B |
| Example 24 | 20 | 0.02 | A | B |
| Example 25 | 21 | 0.02 | A | A |
| Example 26 | 22 | 0.02 | A | A |

**Table 2-2**

| Examples and Comp. Examples | Coating solution | Thickness (µm) | Adhesion property 1 | Adhesion property 2 |
|---|---|---|---|---|
| Example 27 | 23 | 0.02 | A | A |
| Example 28 | 24 | 0.02 | A | A |
| Example 29 | 25 | 0.02 | A | A |
| Example 30 | 26 | 0.02 | A | B |
| Example 31 | 27 | 0.02 | A | A |
| Example 32 | 28 | 0.01 | A | A |
| Example 33 | 28 | 0.02 | A | A |
| Example 34 | 28 | 0.06 | A | A |
| Example 35 | 29 | 0.02 | A | A |
| Example 36 | 30 | 0.02 | A | A |
| Example 37 | 31 | 0.02 | A | B |
| Example 38 | 32 | 0.02 | A | A |
| Example 39 | 33 | 0.02 | A | A |
| Example 40 | 34 | 0.02 | A | A |
| Example 41 | 35 | 0.02 | A | A |
| Example 42 | 36 | 0.02 | A | A |
| Example 43 | 37 | 0.02 | A | A |
| Example 44 | 38 | 0.02 | A | A |
| Example 45 | 39 | 0.02 | A | B |
| Example 46 | 40 | 0.02 | A | A |
| Comp. Example 1 | 41 | 0.02 | D | D |
| Comp. Example 2 | 42 | 0.02 | D | D |
| Comp. Example 3 | 43 | 0.02 | C | D |
| Comp. Example 4 | 44 | 0.02 | C | D |
| Comp. Example 5 | 45 | 0.02 | D | D |
| Comp. Example 6 | 46 | 0.02 | D | D |

### INDUSTRIAL APPLICABILITY

The coated film of the present invention can be suitably used in the applications in which a good adhesion property to a surface functional layer such as a prism layer or a microlens layer, etc., is required, such as, for example, in a backlight unit for liquid crystal displays, etc.

## Claims

1. A coated film comprising:
a polyester film and
a coating layer which is formed on at least one surface of the polyester film and is prepared from a coating solution comprising a urethane (meth)acrylate compound (a) and at least one compound (b) selected from the group consisting of an oxazoline compound, an isocyanate-based compound and a carbodiimide-based compound, wherein a content of a carbon-carbon double bond moiety in the urethane (meth)acrylate compound is not less than 5% by weight.

2. The coated film according to claim 1, wherein the content of a carbon-carbon double bond moiety in the urethane (meth)acrylate compound is not less than 10% by weight.

3. The coated film according to claim 1 or 2, wherein a content of the urethane (meth)acrylate compound in the coating solution is 10 to 95% by weight, and a content of the oxazoline compound in the coating solution is 5 to 90% by weight, both based on a total amount of whole nonvolatile components in the coating solution.

4. The coated film according to claim 1 or 2, wherein a content of the urethane (meth)acrylate compound in the coating solution is 5 to 95% by weight, and a content of the isocyanate-based compound in the coating solution is 5 to 90% by weight, both based on a total amount of whole nonvolatile components in the coating solution.

5. The coated film according to claim 1 or 2, wherein a content of the urethane (meth)acrylate compound in the coating solution is 10 to 95% by weight, and a content of the carbodiimide-based compound in the coating solution is 5 to 90% by weight, both based on a total amount of whole nonvolatile components in the coating solution.

6. The coated film according to claim 1 or 2, comprising an active energy ray-curable resin layer formed on the coating layer.

7. The coated film according to claim 6, wherein a refractive index of the active energy ray-curable resin layer is in the range of 1.56 to 1.65.

## Patentansprüche

1. Beschichteter Film, umfassend:
einen Polyesterfilm und
eine Überzugsschicht, die auf mindestens einer Oberfläche des Polyesterfilms gebildet ist und hergestellt ist aus einer Beschichtungslösung, umfassend eine Urethan-(meth)acrylatverbindung (a) und mindestens eine Verbindung (b), gewählt aus der Gruppe, bestehend aus einer Oxazolinverbindung, einer Isocyanat-basierten Verbindung und einer Carbodiimid-basierten Verbindung, wobei ein Gehalt einer Kohlenstoff-Kohlenstoff-Doppelbindungseinheit in der Urethan-(meth)acrylatverbindung nicht weniger als 5 Gew.-% beträgt.

2. Beschichteter Film nach Anspruch 1, wobei der Gehalt einer Kohlenstoff-Kohlenstoff-Doppelbindungseinheit in der Urethan-(meth)acrylatverbindung nicht weniger als 10 Gew.-% beträgt.

3. Beschichteter Film nach Anspruch 1 oder 2, wobei ein Gehalt der Urethan-(meth)acrylatverbindung in der Beschichtungslösung 10 bis 95 Gew.-% beträgt, und ein Gehalt der Oxazolinverbindung in der Beschichtungslösung 5 bis 90 Gew.-% beträgt, beides basierend auf eine Gesamtmenge an sämtlichen nicht-flüchtigen Komponenten in der Beschichtungslösung.

4. Beschichteter Film nach Anspruch 1 oder 2, wobei ein Gehalt der Urethan-(meth)acrylatverbindung in der Beschichtungslösung 5 bis 95 Gew.-% beträgt, und ein Gehalt der Isocyanat-basierten Verbindung in der Beschichtungslösung 5 bis 90 Gew.-% beträgt, beides basierend auf eine Gesamtmenge an sämtlichen nicht-flüchtigen Komponenten in der Beschichtungslösung.

5. Beschichteter Film nach Anspruch 1 oder 2, wobei ein Gehalt der Urethan-(meth)acrylatverbindung in der Beschichtungslösung 10 bis 95 Gew.-% beträgt, und ein Gehalt der Carbodiimid-basierten Verbindung, in der Beschichtungslösung 5 bis 90 Gew.-% beträgt, beides basierend auf eine Gesamtmenge an sämtlichen nicht-flüchtigen Komponenten in der Beschichtungslösung.

6. Beschichteter Film nach Anspruch 1 oder 2, umfassend eine auf der Überzugsschicht gebildete, durch aktive Energiestrahlung härtbare Harzschicht.

7. Beschichteter Film nach Anspruch 6, wobei ein Brechungsindex der durch aktive Energiestrahlung härtbaren Harzschicht in dem Bereich von 1,56 bis 1,65 liegt.

## Revendications

1. Film revêtu comprenant :
un film de polyester et
une couche de revêtement qui est formée sur au moins une surface du film de polyester et est préparée à partir d'une solution de revêtement comprenant un composé (a) (méth)acrylate d'uréthane et au moins un composé (b) choisi dans le groupe consistant en un composé oxazoline, un composé à base d'isocyanate et un composé à base de carbodiimide, une teneur d'une fraction double liaison carbone - carbone dans le composé (méth)acrylate d'uréthane n'étant pas inférieure à 5 % en poids.

2. Film revêtu selon la revendication 1, dans lequel la teneur d'une fraction double liaison carbone - carbone dans le composé (méth)acrylate d'uréthane n'est pas inférieure à 10 % en poids.

3. Film revêtu selon l'une des revendications 1 ou 2, dans lequel une teneur du composé (méth)acrylate d'uréthane dans la solution de revêtement est de 10 à 95 % en poids, et une teneur du composé oxazoline dans la solution de revêtement est de 5 à 90 % en poids, les deux sur la base d'une quantité totale de composants non volatils totaux dans la solution de revêtement.

4. Film revêtu selon l'une des revendications 1 ou 2, dans lequel une teneur du composé (méth)acrylate d'uréthane dans la solution de revêtement est de 5 à 95 % en poids, et une teneur du composé à base d'isocyanate dans la solution de revêtement est de 5 à 90 % en poids, les deux sur la base d'une quantité totale de composants non volatils totaux dans la solution de revêtement.

5. Film revêtu selon l'une des revendications 1 ou 2, dans lequel une teneur du composé (méth)acrylate d'uréthane dans la solution de revêtement est de 10 à 95 % en poids, et une teneur du composé à base de carbodiimide dans la solution de revêtement est de 5 à 90 % en poids, les deux sur la base d'une quantité totale de composants non volatils totaux dans la solution de revêtement.

6. Film revêtu selon l'une des revendications 1 ou 2, comprenant une couche de résine durcissable par rayonnement d'énergie active formée sur la couche de revêtement.

7. Film revêtu selon la revendication 6, dans lequel un indice de réfraction de la couche de résine durcissable par rayonnement d'énergie active est dans la plage de 1,56 à 1,65.
